# EUROPEAN PATENT APPLICATION

(11) **EP 4 852 543 A1**
(43) Date of publication of application: **09.12.2026**
(21) Application number: 24940227.2
(22) Date of filing: 10.05.2024
(51) Int. Cl.: H04W 52/36

(54) **WIRELESS COMMUNICATION METHODS, TERMINAL DEVICES AND NETWORK DEVICES**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Zhe, Dongguan, Guangdong 523860 (CN); CHEN, Wenhong, Dongguan, Guangdong 523860 (CN)
(74) Representative: Penza, Giancarlo
(86) International application number: PCT/CN2024/092413
(87) International publication number: WO 2025/231865

(57) **Abstract**

Provided are wireless communication methods, terminal devices and network devices. A wireless communication method comprises: a terminal device sending first information to a network device, wherein the first information is used for indicating power headroom, and the power headroom is calculated on the basis of a first path loss offset. In the present application, the calculation of power headroom can take the impact of a path loss offset in an asymmetric TRP scenario into consideration. Therefore, in the asymmetric TRP scenario, power headroom reported by a terminal device can more accurately reflect the uplink transmission status of the terminal device, so that a network device can more accurately perform power control and scheduling.

## Description

### TECHNICAL FIELD

This application relates to the field of communication technologies, and more specifically, to a wireless communication method, a terminal device, and a network device.

### BACKGROUND

Some communication systems have defined asymmetric transmission and reception point (transmitting and receiving point, TRP) scenarios. For example, an uplink (UL) TRP exists in an enhanced asymmetric TRP scenario. The UL TRP may provide only an uplink reception function without a downlink (downlink, DL) transmission function. Based on the UL TRP, the enhanced asymmetric TRP scenario may include a downlink single-TRP (single TRP, sTRP) and uplink multi-TRP (multiple TRP, mTRP) case, that is, an asymmetric DL sTRP/UL mTRP scenario. Some communication processes in the asymmetric TRP scenario need to be defined or improved.

### SUMMARY

This application provides a wireless communication method, a terminal device, and a network device. The following describes various aspects related to this application.

According to a first aspect, a wireless communication method is provided, the method includes: A terminal device transmits first information to a network device, where the first information is used to indicate power headroom, and the power headroom is obtained through calculation based on a first path loss offset (path loss offset, PLO).

According to a second aspect, a wireless communication method is provided, and the method includes: A network device receives first information transmitted by a terminal device, where the first information is used to indicate power headroom, and the power headroom is obtained through calculation based on a first path loss offset.

According to a third aspect, a terminal device is provided, and the terminal device includes: a transmitting unit, configured to transmit first information to a network device, where the first information is used to indicate power headroom, and the power headroom is obtained through calculation based on a first path loss offset.

According to a fourth aspect, a network device is provided, and the network device includes: a receiving unit, configured to receive first information transmitted by a terminal device, where the first information is used to indicate power headroom, and the power headroom is obtained through calculation based on a first path loss offset.

In a fifth aspect, a terminal device is provided, including a processor and a memory, where the memory is configured to store one or more computer programs, and the processor is configured to invoke the computer programs in the memory to cause the terminal device to perform some or all of the steps of the method of the first aspect.

According to a sixth aspect, a network device is provided, including a processor, a memory, and a transceiver. The memory is configured to store one or more computer programs, and the processor is configured to invoke the computer program in the memory to cause the network device to perform a part or all of the steps in the method according to the second aspect.

According to a seventh aspect, an embodiment of this application provides a communication system, where the system includes the terminal device and/or network device described above. In another possible design, the system may further include another device that interacts with the terminal device or the network device in the solutions provided in embodiments of this application.

According to an eighth aspect, an embodiment of this application provides a computer-readable storage medium, where the computer-readable storage medium stores a computer program, and the computer program causes a terminal device and/or a network device to perform a part or all of the steps in the method in the foregoing aspects.

According to a ninth aspect, an embodiment of this application provides a computer program product, where the computer program product includes a non-transitory computer-readable storage medium storing a computer program. The computer program is operable to cause a terminal device and/or a network device to perform a part or all of the steps in the method in the foregoing aspects. In some implementations, the computer program product may be a software installation package.

According to a tenth aspect, an embodiment of this application provides a chip, where the chip includes a memory and a processor, and the processor may invoke a computer program from the memory and run the computer program, to implement a part or all of the steps described in the method in the foregoing aspects.

In this application, impact of a path loss offset in an asymmetric TRP scenario may be considered for calculation of power headroom. Therefore, in the asymmetric TRP scenario, power headroom reported by a terminal device can more accurately reflect an uplink transmission situation of the terminal device, so that a network device can perform power control and scheduling more accurately.

### BRIEF DESCRIPTION OF THE DRAWINGS

FIG. 1 is a schematic diagram of a wireless communication system to which embodiments of this application are applied.
FIG. 2 is an example diagram of a downlink single-TRP and uplink multi-TRP scenario.
FIG. 3 is a schematic flowchart of a wireless communication method according to an embodiment of this application.
FIG. 4 is a schematic structural diagram of a terminal device according to an embodiment of this application.
FIG. 5 is a schematic structural diagram of a network device according to an embodiment of this application.
FIG. 6 is a schematic structural diagram of an apparatus for communication according to an embodiment of this application.

### DETAILED EMBODIMENTS

The following describes technical solutions of this application with reference to the accompanying drawings.

### Communication system

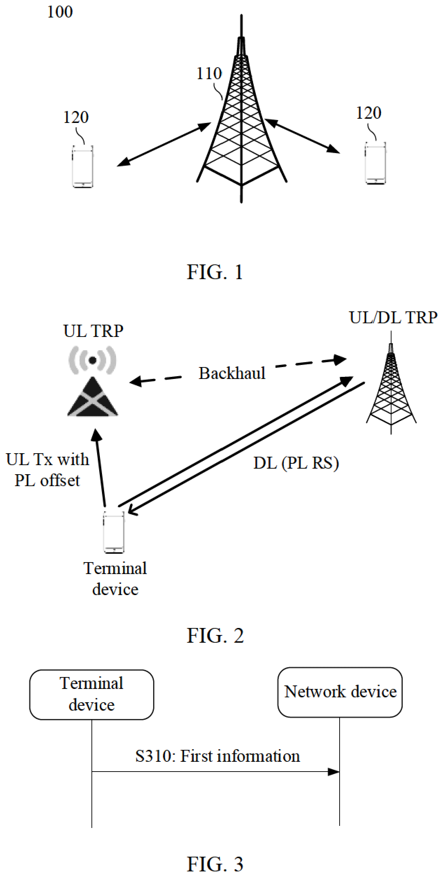

FIG. 1 shows a wireless communication system 100 to which embodiments of this application are applied. The wireless communication system 100 may include a communication device. The communication device may include a network device 110 and a terminal device 120. The network device 110 may be a device that communicates with the terminal device 120.

FIG. 1 schematically shows one network device and two terminals. Optionally, the wireless communication system 100 may include a plurality of network devices, and another quantity of terminal devices may be included within coverage of each network device. This is not limited in embodiments of this application.

Optionally, the wireless communication system 100 may further include another network entity such as a network controller or a mobility management entity, which is not limited in embodiments of this application.

It should be understood that the technical solutions of embodiments of this application may be applied to various communication systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communication system, such as a 6th generation mobile communication system or a satellite communication system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communication device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity that provides sidelink signals between UEs in vehicle-to-everything (vehicle-to-everything, V2X) or device-to-device (device to device, D2D) communication or the like. For example, a cellular phone and a vehicle communicate with each other using sidelink signals. The cellular phone and a smart home device communicate with each other, without relaying a communication signal through a base station.

The network device in embodiments of this application may be a device configured to communicate with a terminal device. The network device may also include an access network device. The access network device may provide communication coverage for a specific geographic area, and may communicate with a terminal device 120 within the coverage area. The access network device may also be referred to as a radio access network device, a base station, or the like. The access network device in embodiments of this application may be a radio access network (radio access network, RAN) node (or device) that connects the terminal device to a wireless network. The access network device may broadly cover the following various names, or may be replaced with the following names, such as NodeB (NodeB), evolved NodeB (evolved NodeB, eNB), next generation NodeB (next generation NodeB, gNB), relay station, TRP, transmission point (transmitting point, TP), master eNodeB (master eNB, MeNB), secondary eNodeB (secondary eNB, SeNB), multi-standard radio (multi-standard radio, MSR) node, home base station, network controller, access node, wireless node, access point (access point, AP), transmission node, transceiver node, baseband unit (baseband unit, BBU), remote radio unit (remote radio unit, RRU), active antenna unit (active antenna unit, AAU), radio head (remote radio head, RRH), central unit (central unit, CU), distributed unit (distributed unit, DU), and positioning node. The base station may be a macro base station, a micro base station, a relay node, a donor node, or the like, or a combination thereof. Alternatively, the base station may be a communication module, a modem, or a chip disposed in the device or apparatus described above. Alternatively, the base station may be a mobile switching center, a device that functions as a base station in D2D, V2X, and machine-to-machine (machine-to-machine, M2M) communication, a network-side device in a 6G network, a device that functions as a base station in a future communication system, or the like. The base station may support networks of a same access technology or different access technologies. A specific technology and a specific device form that are used by the access network device are not limited in the embodiments of this application.

The base station may be a stationary or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

The communication device in the wireless communication system may include not only an access network device and a terminal device, but also a core network element. The core network element may be implemented by a device, that is, the core network element is a core network device. It may be understood that the core network device may also be a network device.

The core network element in embodiments of this application may include a network element that processes and forwards user signaling and data. For example, the core network device may include core network devices such as a core network access and mobility management function (core access and mobility management function, AMF), a session management function (session management function, SMF), a user plane gateway, and a location management function (location management function, LMF). The user plane gateway may be a server having functions such as mobility management, routing, and forwarding for user plane data, and is generally located on a network side, for example, a serving gateway (serving gateway, SGW), a packet data network gateway (packet data network gateway, PGW), or a user plane function (user plane function, UPF) entity. Certainly, a core network may also include other network elements, which are not listed herein one by one.

In some deployments, the network device in embodiments of this application may refer to a CU or a DU, or the network device includes a CU and a DU. The gNB may also include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or a part of functions of the communication device in this application may also be implemented by software functions running on hardware, or by virtualization functions instantiated on a platform (for example, a cloud platform).

### Asymmetric TRP scenario

Some communication systems have defined asymmetric TRP scenarios. For example, in work content of R19 multiple input multiple output (multiple input multiple output, MIMO), the RAN passed content of enhanced asymmetric TRP scenarios. In an enhanced asymmetric TRP scenario, there is an UL TRP. The UL TRP may provide only an uplink reception function without a downlink transmission function. Based on the UL TRP, the enhanced asymmetric TRP scenario may include a downlink sTRP and uplink mTRP case, that is, an asymmetric DL sTRP/UL mTRP scenario.

Optionally, enhancement of an asymmetric DL sTRP/UL mTRP scenarios are specified, for frequency range (frequency range, FR) 1 and FR2, assuming intra-band intra-DU non-co-located mTRP scenarios, without changing existing cell definition or defining a new cell (for example, UL-only cell), and assuming the Rel-17/18 unified transmission configuration indication (ransmission configuration indication, TCI) framework and fully reusing the legacy QCL/UL spatial relation rules (Specify enhancement for asymmetric DL sTRP/UL mTRP deployment scenarios, assuming intra-band intra-DU non-co-located mTRP scenarios, without changing existing cell definition or defining a new cell (e.g. UL-only cell), assuming the Rel-17/18 unified TCI framework and fully reusing the legacy QCL/UL spatial relation rules, targeting FR1 and FR2).

For example, two closed-loop power control (power control, PC) adjustment states for an SRS are both separate from a physical uplink shared channel (physical uplink shared channel, PUSCH) (Two closed-loop PC adjustment states for SRS, both separate from PUSCH). When a path loss reference signal (path loss reference signal, PL RS) is from a DL sTRP, a path loss is calculated as a path loss offset configuration for a UL TRP (pathloss offset configurations for pathloss calculation to UL TRP(s), when the pathloss RS is from DL sTRP).

FIG. 2 shows an example of a downlink single-TRP and uplink multi-TRP case.

In the scenario shown in FIG. 2, there may be one UL TRP and one UL/DL TRP. The UL/DL TRP may provide an uplink reception function and may further provide a downlink transmission function. It may be seen from FIG. 2 that the scenario shown in FIG. 2 includes only one downlink TRP, that is, a downlink sTRP. The scenario shown in FIG. 2 includes multiple uplink TRPs, that is, uplink mTRPs. The UL TRP and the UL/DL TRP may communicate with each other over a backhaul (backhaul) link.

### Path loss measurement in asymmetric TRP scenarios

For path loss measurement in asymmetric TRP scenarios, the terminal device may use a downlink reference signal of the DL TRP for example, DL sTRP) as a PL RS. When the terminal device needs to perform transmission to the UL TRP, the terminal device needs to compensate based on a PL measured using the PL RS of the DL TRP, that is, needs to add a path loss offset (path loss offset, PLO) to calculate a PL. It may be understood that, considering that PL RS is a downlink reference signal, the terminal device needs to estimate the downlink PL by measuring the PL RS, so as to perform corresponding compensation through the path loss offset in uplink transmit power.

As shown in FIG. 2, the terminal device uses the downlink reference signal of the DL sTRP as the PL RS, and the terminal device performs uplink transmission based on the path loss offset (UL Tx with PL offset).

Some communication standardization meetings have proposed associating a PLO with a TCI state (for example, UL TCI state/joint (joint) TCI state). The terminal device may calculate power of PUSCH/physical uplink control channel (physical uplink control channel, PUCCH)/sounding reference signal (sounding reference signal, SRS) based on measurement of a downlink path loss reference signal and a path loss offset.

In some embodiments, for asymmetric DL sTRP/UL mTRP deployment scenarios, association of a UL TCI state with a PLO is supported (For the asymmetric DL sTRP/UL mTRP deployment scenarios, support to associate a UL TCI state with a PL offset).

Optionally, when a UL TCI state associated with a PLO is applied for PUSCH/PUCCH/SRS transmission, the terminal device needs to calculate transmit power of the PUSCH/PUCCH/SRS based on a DL PL RS and PLO associated with this UL TCI state (When a UL TCI state associated with a PL offset is applied for the PUSCH/PUCCH/SRS transmission, the UE shall calculate the Tx power of the PUSCH/PUCCH/SRS based on the DL PL RS and PL offset associated with this UL TCI state). For example, a legacy uplink power control formulation may be reused by replacing a legacy PL with a UL PL derived from the DL PL RS and the PLO (Reuse the legacy uplink power control formulation by replacing legacy PL with UL PL which is derived from the DL PL RS and the PL offset). For example, the following may be further studied: UE may update the UL PL in the following manner: New UL PL = Current UL PL + Update delta indicated by a network (FFS: The UE can update UL PL in a way that new UL PL = current UL PL + an update delta indicated by the NW).

It should be noted that a technical solution of associating the UL TCI state with the PLO may not increase a quantity of PLs maintained per cell (Note: it does not intend to increase the number of maintained PLs per cell).

Optionally, it may be further studied whether/how to apply a PLO on PDCCH-order PRACH (PDCCH-order PRACH) transmission (whether/how to apply a PL offset on PDCCH-order PRACH transmission too).

Optionally, it may be further studied how to determine a Tx beam of PRACH towards a UL TRP (how to determine the Tx beam of PRACH towards UL TRP).

A technical solution of associating the UL TCI state with the PLO does not imply to support 2 TA for single-DCI based system (does not imply to support 2 TA for single-DCI based system).

In some embodiments, for FR1, a joint TCI state may be associated with a PLO. When a joint TCI state associated with a PLO is applied for PUSCH/PUCCH/SRS transmission, the terminal device may calculate transmit power of the PUSCH/PUCCH/SRS based on the DL PL RS and PLO associated with this joint TCI state (For FR1, a joint TCI state can be associated with a PL offset. When a joint TCI state associated with a PL offset is applied for the PUSCH/PUCCH/SRS transmission, the UE shall calculate the Tx power of the PUSCH/PUCCH/SRS based on the DL PL RS and PL offset associated with this joint TCI state).

Optionally, a legacy uplink power control formula may be reused, replacing the legacy PL with a PL derived from the DL PL RS and the PLO.

The network device may configure the PLO via radio resource control (radio resource control, RRC) signaling. For example, the PLO may be directly configured in the joint TCI state/uplink TCI state. For another example, the PLO may be indirectly configured in a bandwidth part (bandwidth part, BWP)/CC, and then an associated PLO configuration is indicated for the joint TCI state/uplink TCI state via other signaling (RRC or media access control control element (MAC CE) signaling. Therefore, in general, the PLO configuration and a value of the PLO may be associated with the joint TCI state/uplink TCI state.

In some embodiments, for association between a PLO and a TCI state, the following options or other options may be considered or selected.

Option 1a: One PLO value may be configured in a joint TCI state/uplink TCI state only via RRC signaling (Alt1a: One PL offset value is configured in a joint or UL TCI state by RRC only).

Option 1b: One PLO value may be configured in a joint TCI state/uplink TCI state via RRC signaling; MAC CE signaling may update the PLO value for the joint TCI state/UL TCI state (Alt1b: One PL offset value is configured in a joint or UL TCI state by RRC. A MAC CE can update the PL offset value(s) for joint or UL TCI state(s)).

Option 2a: A list of PLO configurations may be configured via RRC signaling in BWP/CC, and each PLO configuration contains one PLO value. One new RRC parameter may be introduced in a joint TCI state/uplink TCI state to indicate one of the PLO configurations (Alt2a: A list of PL offset configurations is configured by RRC in BWP/CC and each PL offset configuration contains one PL offset value. One new RRC parameter is introduced in a joint or UL TCI state to indicate one of the configured PL offset configurations).

Option 2b: A list of PLO configurations may be configured via RRC signaling in BWP/CC, and each PLO configuration contains one PLO value. One new RRC parameter may be introduced in a joint TCI state/uplink TCI state to indicate one of the PLO configurations. MAC CE signaling may be used to update association between a joint TCI state/uplink TCI state and a PLO configuration (Alt2b: A list of PL offset configurations is configured by RRC in BWP/CC and each PL offset configuration contains one PL offset value. One new RRC parameter is introduced in a joint or UL TCI state to indicate one of the configured PL offset configurations. A MAC CE can update the association between a joint or UL TCI state and PL offset configuration).

Option 3: A list of PLO configurations may be configured via RRC signaling in BWP/CC, and each PLO configuration contains one PLO value. MAC CE signaling may be used to activate/indicate one PLO configuration for each activated joint TCI state/uplink TCI state. In each joint TCI state/uplink TCI state, an initial PLO value may be 0 dB (Alt3: A list of PL offset configurations is configured by RRC in BWP/CC and each PL offset configuration contains one PL offset value. A MAC CE can activate/indicate one PL offset configuration for each activated joint or UL TCI state. In each joint or UL TCI state, the initial PL offset value is 0dB).

Option 4: A list of PLO configurations may be configured via RRC signaling in BWP/CC. Each PLO value is applied to a corresponding measured PL range (Alt4:A list of PL offset values is provided in a joint or UL TCI state by RRC. Each PL offset value is applied to a corresponding measured PL range).

### Power headroom (power headroom, PH)

In some communication systems, a terminal device may report PH to a network device through a power headroom report (power headroom report, PHR). The network device may perform power control and scheduling based on the power headroom report reported by the terminal device.

For example, a larger PH value indicates more remaining power of the terminal device. Accordingly, the network device may allocate more uplink resources to the terminal device, thereby improving an uplink transmission rate.

The inventors of this application have found that the related art does not consider how to report PH in an asymmetric TRP scenario. To solve the foregoing problem, this application proposes a method shown in FIG. 3.

The method shown in FIG. 3 may be performed by a terminal device and a network device. The method shown in FIG. 3 may include step S310.

Step 310: The terminal device transmits first information to the network device.

The first information may be used to indicate power headroom. For example, the first information may be carried in a PHR. In other words, the PHR may be used to report the first information.

The power headroom may be obtained through calculation based on a first path loss offset. The first path loss offset may be a PLO in the asymmetric TRP scenario (for example, a downlink sTRP and uplink mTRP scenario) described above. That is, based on an estimated downlink PL, uplink transmit power may be compensated by the first path loss offset.

For example, the first path loss offset may correspond to a first path loss. The first path loss may be a path loss estimated through a downlink reference signal. The power headroom may be calculated by using the first path loss and the first path loss offset.

For another example, the first path loss offset may be associated with a path loss reference signal. The path loss reference signal may be a downlink reference signal. That is, the power headroom may be obtained through calculation by using a path loss (for example, the first path loss described above) estimated from the downlink reference signal and the first path loss offset.

In some embodiments, a calculation formula for the power headroom in this application may be implemented based on the calculation formula in the related art. For example, a calculation term related to a path loss offset may be added to the formula in the related art. For another example, a PL in a relevant formula may be replaced with a PL derived from the first path loss and the first path loss offset.

It may be understood that, in this application, impact of a path loss offset may be considered for calculation of power headroom. Therefore, in the asymmetric TRP scenario, power headroom reported by a terminal device can more accurately reflect an uplink transmission situation of the terminal device, so that a network device can perform power control and scheduling more accurately.

In some embodiments, the first path loss offset may be associated with a first TCI state. In other words, the first path loss offset may be determined based on the first TCI state, thereby obtaining the power headroom through calculation. Alternatively, in a formula for calculating the power headroom, the first path loss offset may appear in association with the first TCI state.

Optionally, an association relationship between the first path loss offset and the first TCI state may be configured or indicated via RRC signaling and/or MAC CE signaling. A specific configuration or indication manner of the association relationship may be as described above.

In some embodiments, the first path loss offset may be represented by *PLOₖ*. Herein, the subscript k may indicate an index of a TCI state associated with *PLOₖ*. For example, the index of the TCI state may be an index of a TCI state configured and/or activated by a network device. For example, a value range of k may be k = {0, 1}. Herein, 0 and 1 may respectively indicate a first TCI state and a second TCI state. For another example, a value range of k may be k = {0, 1, ..., K-1}, where K is a number greater than 1. 0, 1, ..., K-1 are indexes of TCI states configured and/or activated by the network device, respectively.

In some embodiments, the first path loss offset may be represented by *PLOₜ*, and the power headroom is represented by *PHₖ*. Herein, the subscript k may represent an index of a TCI state associated with the power headroom, and the subscript t may represent an index of a TCI state configured and/or activated by the network device. For example, a value of the subscript k may be {0, 1}. Herein, 0 and 1 may respectively indicate a first TCI state and a second TCI state. For another example, a value of the subscript t may be {0, 1}. Herein, 0 and 1 may respectively indicate a first TCI state and a second TCI state. For another example, a value of the subscript t may be {0, 1, 2, ..., T-1}, where T is a number greater than 1. 0, 1, ..., T-1 are indexes of TCI states configured and/or activated by the network device, respectively.

It should be noted that the subscript t and the subscript k may be set to the same value at the same time, or may be set separately. Therefore, the value of the subscript t may be the same as or different from the value of the subscript k. For example, the values of t and k may be the same, and the value range is {0, 1} as described above. For another example, t may be independent of k, where the value of k may be {0, 1}, and the value of t may be {0, 1, 2, ..., T-1}.

Optionally, the first TCI state may be an uplink TCI state. Alternatively, the first TCI state may be a joint TCI state.

In some embodiments, the first path loss offset may be associated with a path loss reference signal. In other words, the first path loss offset may be determined based on the path loss reference signal, thereby obtaining the power headroom through calculation. Alternatively, in a formula for calculating the power headroom, the first path loss offset may appear in association with the path loss reference signal.

In some embodiments, the power headroom may be for an uplink signal. The uplink signal may include, for example, one or more of the following: a PUSCH or an SRS. That is, reporting of the power headroom proposed in this application may be reporting of Type 1 power headroom or reporting of Type 3 power headroom. The reporting of the Type 1 power headroom is reporting of power headroom for a PUSCH; reporting of the Type 3 power headroom is reporting of power headroom for an SRS.

It should be noted that the power headroom proposed in this application may alternatively be for other uplink signals, which is not limited in this application.

In some embodiments, the power headroom includes one or more of the following: actual (actual) power headroom for an actually transmitted uplink signal; or virtual power headroom for a reference (reference) uplink signal. For example, the actual power headroom may include: power headroom for an actually transmitted PUSCH, and/or power headroom for an actually transmitted SRS. For another example, the virtual power headroom may include: power headroom for a reference PUSCH, and/or power headroom for a reference SRS.

In some embodiments, the power headroom may be TRP-specific power headroom. In some embodiments, the power headroom may be cell-specific power headroom.

Optionally, the terminal device may determine whether the power headroom is TRP-specific power headroom or cell-specific power headroom based on whether the network device has configured TwoPHRMode via RRC signaling. For example, in the absence of TwoPHRMode configuration, the first information transmitted by the terminal device may indicate the cell-specific power headroom. In this case, the terminal device may indicate power headroom to the network device. For another example, in a case that there is TwoPHRMode configuration, the first information transmitted by the terminal device may indicate a TRP-specific PHR.

In some embodiments, the power headroom may be determined based on a first value, and the first value may be determined based on one of: a sum of the first path loss offset and the first path loss; or a difference between the first path loss offset and the first path loss. In other words, the power headroom may be determined based on one of the following: the sum of the first path loss offset and the first path loss; the difference between the first path loss offset and the first path loss.

For example, the first path loss may be represented by PL (including PL with a subscript), and the first path loss offset may be represented by PLO (including PLO with a subscript). Herein, the PLO may be a positive value or a negative value. The first value may be equal to PL+PLO. Alternatively, the first value may be equal to PL-PLO. It may be determined whether the PLO is a positive value or a negative value based on an actual communication scenario, or a specific value of the PLO may be determined.

For example, the first value may be PL+PLO. When the terminal device is far away from a DL TRP and close to a UL TRP, the PL measured from the DL TRP is larger, and a negative PLO needs to be superimposed on it. In some embodiments, the value of the PLO may be {-40dB, -30dB, -20dB, -10dB} or the like. When the terminal device is close to the DL TRP and far away from the UL TRP, the PL measured from the DL TRP is smaller, and a positive PLO needs to be superimposed on it. In some embodiments, the value of the PLO may be {40dB, 30dB, 20dB, 10dB} or the like.

For example, the first value may be PL-PLO. When the terminal device is far away from the DL TRP and close to the UL TRP, the PL measured from the DL TRP is larger, and a positive PLO needs to be subtracted from it. In some embodiments, the value of the PLO may be {40dB, 30dB, 20dB, 10dB} or the like. When the terminal device is close to the DL TRP and far away from the UL TRP, the PL measured from the DL TRP is smaller, and a negative PLO needs to be subtracted from it. In some embodiments, the value of the PLO may be {-40dB, -30dB, - 20dB, -10dB} or the like.

In some embodiments, impact of a path loss influence factor (or referred to as a path loss weighting factor) may be considered for calculation of the power headroom. The path loss influence factor may be represented by *α* (including *α* with a subscript). The path loss influence factor may be a positive number less than or equal to 1.

For example, the first path loss may be a path loss adjusted based on the path loss influence factor. That is, the path loss influence factor may first affect the first path loss, and then compensation by the first path loss offset is performed. For example, the first path loss may be expressed as *α* · *PL*. The first value may be *α* · *PL* + *PLO* or *α* · *PL* - *PLO*.

For another example, the first value may be obtained through adjustment based on a path loss influence factor. That is, the first path loss may first be compensated by the first path loss offset, and then the compensated path loss may be affected by the path loss influence factor. For example, the first value may be *α ·* (*PL + PLO*) or *α ·* (*PL - PLO*)*.*

For ease of understanding, this application is described in detail below through Embodiment 1 to Embodiment 3.

In Embodiment 1 to Embodiment 3, the first information may be carried in a PHR, the power headroom is represented by PH (including PH with a subscript), the first path loss offset is represented by PLO (including PLO with a subscript), and the first path loss is represented by PL (including PL with a subscript).

### Embodiment 1

Embodiment 1 is an embodiment of reporting of Type 1 ((PUSCH)) power headroom. The following describes different cases of power headroom reporting through Embodiment 1.1 to Embodiment 1.3.

### Embodiment 1.1: PLO associated with a TCI state, with a PHR for an actual PUSCH

Embodiment 1.1 may be divided into cases of whether a network device has configured TwoPHRMode via RRC signaling. Specifically, when TwoPHRMode is configured, a terminal device may transmit a TRP-specific PHR to a network device according to a relevant protocol (for example, the R18 protocol). When TwoPHRMode is not configured, the terminal device transmits a PHR to the network device.

### Case of no TwoPHRMode configuration

A PHR calculation formula may be as follows: $\begin{matrix}{PH}_{type 1 , b , f , c} \left(i, j, {q}_{d}, l\right) = \\ {P}_{CMAX , f , c} \left(i\right) - \left\{{P}_{O_PUSCH , b , f , c}\left(j\right)+10{log}_{10}\left({2}^{μ}⋅{M}_{RB , b , f , c}^{PUSCH}\left(i\right)\right)+{α}_{b , f , c}\left(j\right)⋅\left(\begin{matrix}{PL}_{b , f , c} \left({q}_{d}\right) \pm \\ {PLO}_{k}\end{matrix}\right)+{Δ}_{TF , b , f , c}\left(i\right)+{f}_{b , f , c}\left(i, l\right)\right\} \left[dB\right] .\end{matrix}$

Meanings of the parameters are as follows.

*b* represents a bandwidth part (bandwidth part, BWP).

*f* represents a carrier (carrier) (for example, an uplink carrier or a supplementary uplink (supplementary UL, SUL) carrier in a cell).

*c* represents a serving cell (serving cell).

*i* represents a transmission occasion (transmission occasion).

*j* represents a parameter configuration index.

*q_{d}* represents an index of a reference signal used for path loss measurement.

*l* represents an index of a closed-loop power control adjustment state.

*P*_{*O*_PUSCH,*b*,*f,c*}(*j*) represents target received power.

*α_{b,f,c}*(*j*) represents a path loss weighting factor.

*PL_{b,f,c}*(*q_{d}*) represents a path loss value measured based on a reference signal for path loss.

*f_{b,f,c}*(*i, l*) represents a closed-loop power control adjustment state, including cumulative closed-loop power control (acting on an accumulated power control value via an accumulator) and absolute closed-loop power control (directly acting on a power adjustment value).

Other power control parameters include: *P*_{CMAX,*f*,*c*}(*i*), indicating maximum transmit power of the terminal device at the carrier *f* of a serving cell c; and ${M}_{RB , b , f , c}^{PUSCH} \left(i\right)$, indicating a transmission bandwidth of a PUSCH (number of RBs allocated to resources).

*PL_{b,f,c}*(*q_{d}*) represents a path loss. *PL_{b,f,c}*(*q_{d}*) may satisfy: *PL_{b,f,c}*(*q_{d}*) = *referenceSignalPower* - higher layer filtered RSRP. Herein, "higher layer filtered RSRP" is RSRP filtered by a higher layer, and the RSRP is measured by the terminal device based on a downlink reference signal. A higher-layer parameter *referenceSignalPower* may be determined in the following manner: If the terminal device is not configured for periodic CSI-RS reception, *referenceSignalPower* is determined by *ss-PBCH-BlockPower*, and *ss-PBCH-BlockPower* is SSB transmit power; if the terminal device is configured for periodic CSI-RS reception, *referenceSignalPower* is determined based on *ss-PBCH-BlockPower*, or determined based on *ss-PBCH-BlockPower* and *powerControlOffsetSS*, where *powerControlOffsetSS* is a power offset of CSI-RS transmit power relative to the SSB transmit power.

For the foregoing formula, it may be understood that *referenceSignalPower* is transmit power at which the network device transmits a downlink reference signal. "higher layer filtered RSRP" is received power of a downlink reference signal transmitted by the network device and received by the terminal device. The difference between the two parameters is the path loss.

It should be noted that, in the foregoing formula, operations of the PLO on the path loss PL are divided into two possible cases.

A first case is an operation of "addition": PL+PLO. When the terminal device is far away from a DL TRP and close to a UL TRP, the PL measured from the DL TRP is larger, and a negative PLO needs to be superimposed on the PL. In some embodiments, the value of the PLO may be {-40dB, -30dB, -20dB, -10dB} or the like.

A second case is an operation of "subtraction": PL-PLO. When the terminal device is far away from the DL TRP and close to the UL TRP, the PL measured from the DL TRP is larger, and a positive PLO needs to be subtracted from it. In some embodiments, the value of the PLO may be {40dB, 30dB, 20dB, 10dB} or the like.

Additionally, it is very critical that the subscript k of *PLOₖ* may be associated with an uplink TCI state/joint TCI state.

In some embodiments, a value range of the subscript k may be k = {0, 1}. 0 and 1 may respectively indicate a first TCI state and a second TCI state. The first TCI state or the second TCI state may be an uplink TCI state/joint TCI state. As described above, the PLO and TCI state may be configured and/or their association relationship may be indicated, via RRC signaling and/or MAC CE signaling.

In other embodiments, the subscript k may have a value range larger than {0, 1}. For example, k = {0, 1, ..., K-1}. Herein, k may serve as an index of a TCI state configured and/or activated by the network device. Herein, the TCI state is an uplink TCI state/joint TCI state.

### Case of presence of TwoPHRMode configuration

In addition to configuring the RRC parameter TwoPHRMode, in some embodiments, the network device further needs to configure other parameters together to complete a PHR for each indicated TCI state. For example, two SRS resource sets may be configured for the purpose of "codebook" or "non-codebook" transmission. For another example, a unified TCI state may be configured, and the first TCI state and the second TCI state are indicated. For another example, an uplink transmission scheme for multiple antenna panels may be configured.

The terminal device may calculate, according to the following formula, a Type 1 PHR associated with the first or second TCI state.$\begin{matrix}{PH}_{type 1 , b , f , k} \left(i, j, {q}_{d}, l\right) = \\ {P}_{CMAX , f , c , k} \left(i\right) - \left\{{P}_{O_PUSCH , b , f , c}\left(j\right)+10{log}_{10}\left({2}^{μ}⋅{M}_{RB , b , f , c}^{PUSCH}\left(i\right)\right)+{α}_{b , f , c}\left(j\right)⋅\left(\begin{matrix}{PL}_{b , f , c} \left({q}_{d}\right) \pm \\ {PLO}_{k}\end{matrix}\right)+{Δ}_{TF , b , f , c}\left(i\right)+{f}_{b , f , c}\left(i, l\right)\right\} \left[dB\right] .\end{matrix}$

It should be noted that, unlike the case of no TwoPHRMode configuration, the subscripts of *PH*_{type1,*b,f,c,k*} and *P*_{CMAX,*f*,*c*,*k*} also include the variable k. k is used to indicate an associated TCI state, that is, associated with an indicated first TCI state or second TCI state. For description of other parameters in the formula, reference may be made to the description of the formula in the case of no TwoPHRMode configuration in Embodiment 1.1.

It should be noted that, for distinguishing from the already used subscript k, the PLO may use the subscript t. In some embodiments, the subscript t may be the same as the subscript k, that is, with a value of {0, 1}, representing the indicated first TCI state or second TCI state. In some embodiments, t may be independent of the subscript k, that is, the value range of t is {0, 1, 2, ..., T-1}, representing one of multiple uplink TCI states/joint TCI states configured and/or activated by a network.

### Embodiment 1.2: PLO associated with an indicated TCI state, with a virtual PHR (based on a reference PUSCH)

When a terminal transmits a virtual PHR (that is, based on a reference PUSCH instead of an actually transmitted PUSCH), the following description is provided for two cases of whether a TwoPHRMode parameter is configured.

### Case of no TwoPHRMode configuration

A PHR calculation formula may be as follows: $\begin{matrix}{PH}_{type 1 , b , f , c} \left(i, j, {q}_{d}, l\right) = \\ {{P}^{˜}}_{CMAX , f , c} \left(i\right) - \left\{{P}_{O_PUSCH , b , f , c}\left(j\right)+{α}_{b , f , c}\left(j\right)⋅\left({PL}_{b , f , c}\left({q}_{d}\right)\pm {PLO}_{k}\right)+{f}_{b , f , c}\left(i, l\right)\right\} \left[dB\right] .\end{matrix}$

Herein, calculation of *P̃*_{CMAX,*f*,*c*}(*i*) as maximum configured transmit power assumes that power back-off factors are all 0, that is, MPR = 0 dB, A-MPR = 0 dB, P-MPR = 0 dB, and Tc = 0 dB. For MPR, A-MPR, P-MPR, and Tc, refer to the definitions in the following RAN4 protocols: [8-1, TS 38.101-1], [8-2, TS 38.101-2] and [8-3, TS 38.101-3].

It should be noted that, in the foregoing formula, operations of the PLO on the path loss PL may be divided into two possible cases: PL plus or minus PLO. For details about these two cases, refer to the description above.

It should be noted that the subscript k of *PLOₖ* may be associated with a TCI state.

In some embodiments, a value range of the subscript k may be k = {0, 1}. Herein, 0 and 1 respectively indicate a first TCI state and a second TCI state. The first TCI state or the second TCI state may be an uplink TCI state or joint TCI state. As described above, an association relationship between the PLO and the TCI state may be configured via RRC signaling and/or MAC CE signaling.

In some other embodiments, the subscript k may have a larger range, for example, k = {0, 1, ..., K-1}. Herein, k may serve as an index of a TCI state configured and/or activated by a network device. Similarly, the TCI state may be an uplink TCI state or a joint TCI state.

### Case of presence of TwoPHRMode configuration

In some embodiments, in addition to configuring the RRC parameter TwoPHRMode, the network device further needs to configure two SRS resource sets, which are intended for "codebook" or "non-codebook" transmission. In addition, the network device may further configure a unified TCI state, indicating the first TCI state and the second TCI state. Additionally, the network device may configure an uplink transmission scheme for multiple antenna panels.

The terminal device may calculate, according to the following formula, a Type 1 PHR associated with the first TCI state or the second TCI state. $\begin{matrix}{PH}_{type 1 , b , f , c , k} \left(i, j, {q}_{d}, l\right) = \\ {{P}^{˜}}_{CMAX , f , c , k} \left(i\right) - \left\{{P}_{O_PUSCH , b , f , c}\left(j\right)+{α}_{b , f , c}\left(j\right)⋅\left({PL}_{b , f , c}\left({q}_{d}\right)\pm {PLO}_{t}\right)+{f}_{b , f , c}\left(i, l\right)\right\} \left[dB\right]\end{matrix}$

It should be noted that, unlike the case of no TwoPHRMode configuration, the subscripts of *PH*_{type1*,b,f,c,k*} and *P*_{CMAX*,f,c,k*} also include the variable k. k may be used to indicate association with the indicated first or second TCI state. Similar to the case of no TwoPHRMode configuration, the PLO may use the subscript t for distinguishing from the subscript k. The relationship between t and k and the explanation thereof are as described above.

### Embodiment 1.3: PLO associated with a PL RS, with an actual PHR

In the foregoing Embodiment 1.1 and Embodiment 1.2, the PLO appears in the formula of the PHR in association with the TCI state. In some embodiments, the PLO may appear directly in a PHR calculation manner in association with a PL RS. For example, the PL RS and its index are *q_{d}.*

Similarly, there may be two cases: presence of TwoPHRMode configuration and no TwoPHRMode configuration. There may be cases of an actual PHR based on a transmitted PUSCH and a virtual PHR based on a reference PUSCH.

To save space, only PHR calculation formulas under different conditions are listed below, and for explanation of relevant parameters in the formulas, refer to the description above.

### Case of no TwoPHRMode, with an actual PHR

$\begin{matrix}{PH}_{type 1 , b , f , c} \left(i, j, {q}_{d}, l\right) = \\ {P}_{CMAX , f , c} \left(i\right) - \left\{{P}_{O_PUSCH , b , f , c}\left(j\right)+10{log}_{10}\left({2}^{μ}⋅{M}_{RB , b , f , c}^{PUSCH}\left(i\right)\right)+{α}_{b , f , c}\left(j\right)⋅\left(\begin{matrix}{PL}_{b , f , c} \left({q}_{d}\right) \pm \\ {PLO}_{k}\end{matrix}\right)+{Δ}_{TF , b , f , c}\left(i\right)+{f}_{b , f , c}\left(i, l\right)\right\} \left[dB\right] .\end{matrix}$

Cases of presence of TwoPHRMode, with an actual PHR$\begin{matrix}{PH}_{type 1 , b , f , c} , k \left(i, j, {q}_{d}, l\right) = \\ {P}_{CMAX , f , c} , k \left(i\right) - \left\{{P}_{O_PUSCH , b , f , c}\left(j\right)+10{log}_{10}\left({2}^{μ}⋅{M}_{RB , b , f , c}^{PUSCH}\left(i\right)\right)+{α}_{b , f , c}\left(j\right)⋅\left(\begin{matrix}{PL}_{b , f , c} \left({q}_{d}\right) \pm \\ {PLO}_{k}\end{matrix}\right)+{Δ}_{TF , b , f , c}\left(i\right)+{f}_{b , f , c}\left(i, l\right)\right\} \left[dB\right] .\end{matrix}$

### Case of no TwoPHRMode, with a virtual PHR

$\begin{matrix}{PH}_{type 1 , b , f , c} \left(i, j, {q}_{d}, l\right) = \\ {{P}^{˜}}_{CMAX , f , c} \left(i\right) - \left\{{P}_{O_PUSCH , b , f , c}\left(j\right)+{α}_{b , f , c}\left(j\right)⋅\left({PL}_{b , f , c}\left({q}_{d}\right)\pm PLO\left({q}_{d}\right)\right)+{f}_{b , f , c}\left(i, l\right)\right\} \left[dB\right] .\end{matrix}$

### Case of presence of TwoPHRMode, with a virtual PHR

$\begin{matrix}{PH}_{type 1 , b , f , c , k} \left(i, j, {q}_{d}, l\right) = \\ {{P}^{˜}}_{CMAX , f , c , k} \left(i\right) - \left\{{P}_{O_PUSCH , b , f , c}\left(j\right)+{α}_{b , f , c}\left(j\right)⋅\left({PL}_{b , f , c}\left({q}_{d}\right)\pm PLO\left({q}_{d}\right)\right)+{f}_{b , f , c}\left(i, l\right)\right\} \left[dB\right] .\end{matrix}$

### Embodiment 2

Embodiment 2 is an embodiment of reporting of Type 3 (SRS) power headroom.

In some communication protocols (for example, NR protocol), repeated transmission of SRS multi-antenna panels is not supported. Therefore, in Embodiment 2, it is not necessary to consider whether TwoPHRMode is configured.

The following describes different cases of power headroom reporting through Embodiment 2.1 to Embodiment 2.3. Different cases are mainly distinguished based on whether the PHR is based on an actually transmitted SRS (that is, actual PHR) or a reference SRS (that is, virtual PHR).

### Embodiment 2.1: PLO associated a TCI state, with reporting of an actual PHR

It should be noted that the TCI state associated with the PLO may be an uplink TCI state or a joint TCI state.

A PHR calculation formula may be as follows: $\begin{matrix}{PH}_{type 3 , b , f , c} \left(i, {q}_{s}\right) = {P}_{CMAX , f , c} \left(i\right) - \\ \left\{\begin{matrix}{P}_{O_SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ \left({PL}_{b , f , c}\left({q}_{d}\right)\pm {PLO}_{k}\right) + \\ {h}_{b , f , c} \left(i\right)\end{matrix}\right\} \left[dB\right] .\end{matrix}$

Meanings of parameters in this formula are as follows.

*qₛ* represents an index of an SRS resource set. *qₛ* may be configured by an RRC parameter.

*h_{b,f,c}*(*i, l*) represents a closed-loop power control adjustment state of an SRS. *h_{b,f,c}*(*i, l*) may be indicated by RRC signaling to use a same closed-loop power adjustment state as that associated with a temporally nearest PUSCH, or to use an independent closed-loop power control adjustment state.

*P*_{*O_*SRS,*b*,*f*,*c*}(*qₛ*) represents target received power of an SRS.

*α*_{SRS*,b*,*f,c*}(*qₛ*) represents a path loss weighting factor.

*M*_{SRS,*b*,*f*,*c*}(*i*) represents a transmission bandwidth allocated to an SRS, that is, a quantity of RBs occupied.

SRS power control is performed based on an SRS resource set, and SRS resources within one SRS resource set use same power control parameters.

It should be noted that for description of the meaning and a value of the subscript k in the formula, reference may be made to the description above. Details are not repeated herein.

### Embodiment 2.2: PLO associated a TCI state, with reporting of a virtual PHR

A PHR calculation formula may be as follows: $\begin{matrix}{PH}_{type 3 , b , f , c} \left(i, {q}_{s}\right) = {{P}^{˜}}_{CMAX , f , c} \left(i\right) - \\ \left\{{P}_{O _ SRS , b , f , c}\left({q}_{s}\right)+{α}_{SRS , b , f , c}\left({q}_{s}\right)⋅\left({PL}_{b , f , c}\left({q}_{d}\right)\pm {PLO}_{k}\right)+{h}_{b , f , c}\left(i\right)\right\} \left[dB\right] .\end{matrix}$

For details of the parameters in the formula, refer to the description above.

### Embodiment 2.3: PLO associated with a PL RS, with reporting of an actual PHR

In Embodiment 2.3, a case in which a PLO is associated with a PL RS is considered. For an actually transmitted SRS, a PHR calculation formula is as follows: $\begin{matrix}{PH}_{type 3 , b , f , c} \left(i, {q}_{s}\right) = {P}_{CMAX , f , c} \left(i\right) - \\ \left\{\begin{matrix}{P}_{O_SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ \left({PL}_{b , f , c}\left({q}_{d}\right)\pm PLO\left({q}_{d}\right)\right) + \\ {h}_{b , f , c} \left(i\right)\end{matrix}\right\} \left[dB\right] .\end{matrix}$

For details of the parameters in the formula, refer to the description above.

### Embodiment 2.4: PLO associated with a PL RS, with reporting of a virtual PHR

In Embodiment 2.4, a case in which a PLO is associated with a PL RS is considered. For a reference SRS, a PHR calculation formula is as follows: $\begin{matrix}{PH}_{type 3 , b , f , c} \left(i, {q}_{s}\right) = {{P}^{˜}}_{CMAX , f , c} \left(i\right) - \\ \left\{{P}_{O _ SRS , b , f , c}\left({q}_{s}\right)+{α}_{SRS , b , f , c}\left({q}_{s}\right)⋅\left({PL}_{b , f , c}\left({q}_{d}\right)\pm {PLO}_{\left({q}_{d}\right)}\right)+{h}_{b , f , c}\left(i\right)\right\} \left[dB\right] .\end{matrix}$

For details of the parameters in the formula, refer to the description above.

### Embodiment 3

Embodiment 3 exemplarily illustrates impact of a path loss factor on a PHR. Herein, the PHR may be a Type 1 or Type 3 PHR. That is, the path loss factor can affect both the Type 1 PHR and the Type 3 PHR.

A value range of the path loss influence factor may be between 0 and 1.

Optionally, a manner in which the path loss influence factor affects the PHR may be after adjustment of a PL by an offset. This is a relatively proper approach, that is, the representation in the foregoing formula.

Optionally, the path loss influence factor first affects the path loss, and then compensation by the path loss offset is performed. That is, the path loss is first multiplied by the path loss factor, and then compensation by the path loss offset is performed.

Specifically, *α*_{*b*,*f*,*c*}(*j*) *·* (*PL_{b,f,c}*(*q_{d}*) ± *PLOₖ*) in the foregoing formula may be replaced with: *α*_{*b*,*f*,*c*}(*j*) *· PL_{b,f,c}*(*q_{d}*) ± *PLOₖ . α*_{*b*,*f*,*c*}(*j*) *·* (*PL_{b,f,c}*(*q_{d}*) *± PLOₜ*) may be replaced with: *α*_{*b*,*f*,*c*}(*j*) · *PL_{b,f,c}*(*q_{d}*) *± PLOₜ · α_{b,f,c}*(*j*) · (*PL_{b,f,c}*(*q_{d}*) ± *PLO*(*q_{d}*)) may be replaced with: *α_{b,f,c}*(*j*) *· PL_{b,f,c}*(*q_{d}*) *± PLO*(*q_{d}*) *. α*_{*b*,*f*,*c*}(*j*) · (*PL_{b,f,c}*(*q_{d}*) ± *PLOₖ*) may be replaced with: *α*_{SRS*,b,f,c*}(*qₛ*) *· PL_{b,f,c}*(*q_{d}*) *± PLOₖ . α_{b,f,c}*(*j*) · (*PL_{b,f,c}*(*q_{d}*) ± *PLO*(*q_{d}*)) may be replaced with: *α*_{SRS,*b*,*f*,*c*}(*qₛ*) · *PL_{b,f,c}*(*q_{d}*) *± PLO*(*q_{d}*)*.*

The method embodiments of this application are described in detail above, and apparatus embodiments of this application are described in detail below. It should be understood that the descriptions of the method embodiments correspond to descriptions of the apparatus embodiments, and therefore, for parts that are not described in detail, reference may be made to the foregoing method embodiments.

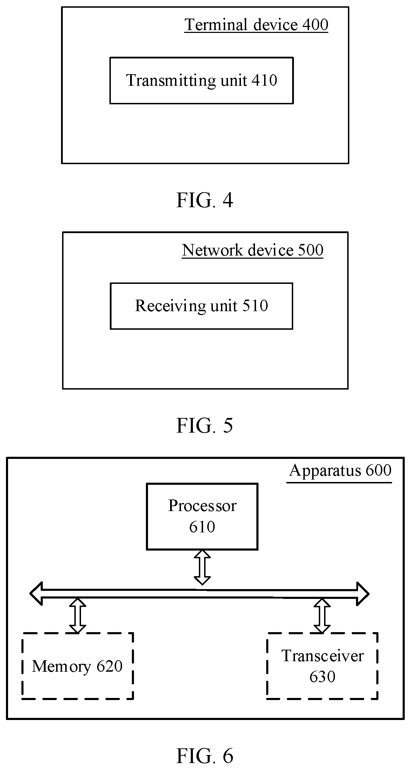

FIG. 4 is a schematic structural diagram of a terminal device 400 according to an embodiment of this application. The terminal device 400 may include a transmitting unit 410.

The transmitting unit 410 is configured to transmit first information to a network device, where the first information is used to indicate power headroom, and the power headroom is obtained through calculation based on a first path loss offset.

In some embodiments, the first path loss offset is associated with a first TCI state.

In some embodiments, the first TCI state is an uplink TCI state or a joint TCI state.

In some embodiments, the first path loss offset is associated with a path loss reference signal.

In some embodiments, an uplink signal for which the power headroom is intended includes one or more of the following: a PUSCH or an SRS.

In some embodiments, the power headroom includes one or more of the following: actual power headroom for an actually transmitted uplink signal; or virtual power headroom for a reference uplink signal.

In some embodiments, the power headroom is TRP-specific power headroom, or the power headroom is cell-specific power headroom.

In some embodiments, the first path loss offset corresponds to a first path loss, the power headroom is determined based on a first value, and the first value is determined based on one of the following: a sum of the first path loss offset and the first path loss; or a difference between the first path loss offset and the first path loss.

In some embodiments, the first path loss is a path loss obtained through adjustment based on a path loss influence factor; or the first value is obtained through adjustment based on the path loss influence factor.

In an optional embodiment, the transmitting unit 410 may be a transceiver 630. The terminal device 400 may further include a processor 610 and a memory 620, which are specifically shown in FIG. 6.

FIG. 5 is a schematic structural diagram of a network device 500 according to an embodiment of this application. The network device 500 may include a receiving unit 510.

The receiving unit 510 is used to receive first information transmitted by a terminal device, where the first information is used to indicate power headroom, and the power headroom is obtained through calculation based on a first path loss offset.

In some embodiments, the first path loss offset is associated with a first TCI state.

In some embodiments, the first TCI state is an uplink TCI state or a joint TCI state.

In some embodiments, the first path loss offset is associated with a path loss reference signal.

In some embodiments, an uplink signal for which the power headroom is intended includes one or more of the following: a physical uplink shared channel PUSCH or a channel sounding reference signal SRS.

In some embodiments, the power headroom includes one or more of the following: actual power headroom for an actually transmitted uplink signal; or
virtual power headroom for a reference uplink signal.

In some embodiments, the power headroom is TRP-specific power headroom, or the power headroom is cell-specific power headroom.

In some embodiments, the first path loss offset corresponds to a first path loss, the power headroom is determined based on a first value, and the first value is determined based on one of the following: a sum of the first path loss offset and the first path loss; or a difference between the first path loss offset and the first path loss.

In some embodiments, the first path loss is a path loss obtained through adjustment based on a path loss influence factor; or the first value is obtained through adjustment based on the path loss influence factor.

In an optional embodiment, the receiving unit 510 may be a transceiver 630. The network device 500 may further include a processor 610 and a memory 620, which are specifically shown in FIG. 6.

FIG. 6 is a schematic structural diagram of an apparatus for communication according to an embodiment of this application. Dashed lines in FIG. 6 indicate that a unit or module is optional. The apparatus 600 may be configured to implement the methods described in the foregoing method embodiments. The apparatus 600 may be a chip, a terminal device, or a network device.

The apparatus 600 may include one or more processors 610. The processor 610 may support the apparatus 600 in implementing the methods described in the foregoing method embodiments. The processor 610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

The apparatus 600 may further include one or more memories 620. The memory 620 stores a program, where the program may be executed by the processor 610, to cause the processor 610 to execute the method described in the foregoing method embodiment. The memory 620 may be separate from the processor 610 or may be integrated into the processor 610.

The apparatus 600 may further include a transceiver 630. The processor 610 may communicate with another device or chip through the transceiver 630. For example, the processor 610 may transmit data to and receive data from another device or chip through the transceiver 630.

An embodiment of this application further provides a computer-readable storage medium for storing a program. The computer-readable storage medium may be applied to the terminal device or the network device provided in embodiments of this application, and the program causes a computer to execute the methods performed by the terminal device or the network device in various embodiments of this application.

An embodiment of this application further provides a computer program product. The computer program product includes a program. The computer program product may be applied to the terminal device or the network device provided in embodiments of this application, and the program causes a computer to perform the methods performed by the terminal device or the network device in various embodiments of this application.

An embodiment of this application further provides a computer program. The computer program may be applied to a terminal device or a network device provided in embodiments of this application, and the computer program causes a computer to perform the methods performed by the terminal device or the network device in various embodiments of this application.

It should be understood that the terms "system" and "network" in this application may be used interchangeably. In addition, the terms used in this application are merely used to explain specific embodiments of this application, and are not intended to limit this application. In the specification, claims, and accompanying drawings of this application, the terms "first", "second", "third", "fourth", and so on are intended to distinguish between different objects but do not describe a particular order. In addition, the terms "including" and "having" and any other variants thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communication field, which may include, for example, an LTE protocol, an NR protocol, and a related protocol applied to a future communication system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described device embodiment is merely an example. For example, the unit division is merely logical function division and may be other division in actual implementation. For example, a plurality of units or components may be combined or integrated into another system, or some features may be omitted or not performed. In addition, the displayed or discussed mutual couplings or direct couplings or communication connections may be implemented by using some interfaces. The indirect couplings or communication connections between the apparatuses or units may be implemented in electronic, mechanical, or other forms.

Units described as separate components may or may not be physically separate, and components displayed as units may or may not be physical units, which may be located in one place, or may be distributed on a plurality of network units. Some or all of the units may be selected according to actual requirements to implement the objectives of the solutions in this embodiment.

In addition, the functional units in embodiments of this application may be integrated into one processing unit, or each unit may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on the computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a terminal device, first information to a network device,
wherein the first information is used to indicate power headroom, and the power headroom is obtained through calculation based on a first path loss offset.

2. The method according to claim 1, wherein the first path loss offset is associated with a first transmission configuration indication TCI state.

3. The method according to claim 2, wherein the first TCI state is an uplink TCI state or a joint TCI state.

4. The method according to claim 1, wherein the first path loss offset is associated with a path loss reference signal.

5. The method according to any one of claims 1 to 4, wherein an uplink signal for which the power headroom is intended comprises one or more of the following: a physical uplink shared channel PUSCH or a channel sounding reference signal SRS.

6. The method according to any one of claims 1 to 5, wherein the power headroom comprises one or more of the following:
actual power headroom for an actually transmitted uplink signal; or
virtual power headroom for a reference uplink signal.

7. The method according to any one of claims 1 to 6, wherein
the power headroom is transmission and reception point TRP-specific power headroom; or
the power headroom is cell-specific power headroom.

8. The method according to any one of claims 1 to 7, wherein the first path loss offset corresponds to a first path loss, the power headroom is determined based on a first value, and the first value is determined based on one of the following:
a sum of the first path loss offset and the first path loss; or
a difference between the first path loss offset and the first path loss.

9. The method according to claim 8, wherein
the first path loss is a path loss obtained through adjustment based on a path loss influence factor; or
the first value is obtained through adjustment based on the path loss influence factor.

10. A wireless communication method, comprising:
receiving, by a network device, first information transmitted by a terminal device,
wherein the first information is used to indicate power headroom, and the power headroom is obtained through calculation based on a first path loss offset.

11. The method according to claim 10, wherein the first path loss offset is associated with a first transmission configuration indication TCI state.

12. The method according to claim 11, wherein the first TCI state is an uplink TCI state or a joint TCI state.

13. The method according to claim 10, wherein the first path loss offset is associated with a path loss reference signal.

14. The method according to any one of claims 10 to 13, wherein an uplink signal for which the power headroom is intended comprises one or more of the following: a physical uplink shared channel PUSCH or a channel sounding reference signal SRS.

15. The method according to any one of claims 10 to 14, wherein the power headroom comprises one or more of the following:
actual power headroom for an actually transmitted uplink signal; or
virtual power headroom for a reference uplink signal.

16. The method according to any one of claims 10 to 15, wherein
the power headroom is transmission and reception point TRP-specific power headroom; or
the power headroom is cell-specific power headroom.

17. The method according to any one of claims 10 to 16, wherein the first path loss offset corresponds to a first path loss, the power headroom is determined based on a first value, and the first value is determined based on one of the following:
a sum of the first path loss offset and the first path loss; or
a difference between the first path loss offset and the first path loss.

18. The method according to claim 17, wherein
the first path loss is a path loss obtained through adjustment based on a path loss influence factor; or
the first value is obtained through adjustment based on the path loss influence factor.

19. A terminal device, comprising:
a transmitting unit, configured to transmit first information to a network device,
wherein the first information is used to indicate power headroom, and the power headroom is obtained through calculation based on a first path loss offset.

20. The terminal device according to claim 19, wherein the first path loss offset is associated with a first transmission configuration indication TCI state.

21. The terminal device according to claim 20, wherein the first TCI state is an uplink TCI state or a joint TCI state.

22. The terminal device according to claim 19, wherein the first path loss offset is associated with a path loss reference signal.

23. The terminal device according to any one of claims 19 to 22, wherein an uplink signal for which the power headroom is intended comprises one or more of the following: a physical uplink shared channel PUSCH or a channel sounding reference signal SRS.

24. The terminal device according to any one of claims 19 to 23, wherein the power headroom comprises one or more of the following:
actual power headroom for an actually transmitted uplink signal; or
virtual power headroom for a reference uplink signal.

25. The terminal device according to any one of claims 19 to 24, wherein
the power headroom is transmission and reception point TRP-specific power headroom; or
the power headroom is cell-specific power headroom.

26. The terminal device according to any one of claims 19 to 25, wherein the first path loss offset corresponds to a first path loss, the power headroom is determined based on a first value, and the first value is determined based on one of the following:
a sum of the first path loss offset and the first path loss; or
a difference between the first path loss offset and the first path loss.

27. The terminal device according to claim 26, wherein
the first path loss is a path loss obtained through adjustment based on a path loss influence factor; or
the first value is obtained through adjustment based on the path loss influence factor.

28. A network device, comprising:
a receiving unit, configured to receive first information transmitted by a terminal device,
wherein the first information is used to indicate power headroom, and the power headroom is obtained through calculation based on a first path loss offset.

29. The network device according to claim 28, wherein the first path loss offset is associated with a first transmission configuration indication TCI state.

30. The network device according to claim 29, wherein the first TCI state is an uplink TCI state or a joint TCI state.

31. The network device according to claim 28, wherein the first path loss offset is associated with a path loss reference signal.

32. The network device according to any one of claims 28 to 31, wherein an uplink signal for which the power headroom is intended comprises one or more of the following: a physical uplink shared channel PUSCH or a channel sounding reference signal SRS.

33. The network device according to any one of claims 28 to 32, wherein the power headroom comprises one or more of the following:
actual power headroom for an actually transmitted uplink signal; or
virtual power headroom for a reference uplink signal.

34. The network device according to any one of claims 28 to 33, wherein
the power headroom is transmission and reception point TRP-specific power headroom; or
the power headroom is cell-specific power headroom.

35. The network device according to any one of claims 28 to 34, wherein the first path loss offset corresponds to a first path loss, the power headroom is determined based on a first value, and the first value is determined based on one of the following:
a sum of the first path loss offset and the first path loss; or
a difference between the first path loss offset and the first path loss.

36. The network device according to claim 35, wherein
the first path loss is a path loss obtained through adjustment based on a path loss influence factor; or
the first value is obtained through adjustment based on the path loss influence factor.

37. A terminal device, comprising a transceiver, a memory, and a processor, wherein the memory is configured to store a program, and the processor is configured to invoke the program in the memory and control the transceiver to transmit or receive a signal, to cause the terminal device to perform the method according to any one of claims 1 to 9.

38. A network device, comprising a transceiver, a memory, and a processor, wherein the memory is configured to store a program, and the processor is configured to invoke the program in the memory and control the transceiver to transmit or receive a signal, to cause the network device to perform the method according to any one of claims 10 to 18.

39. An apparatus, comprising a processor configured to invoke a program from a memory, to cause the apparatus to perform the method according to any one of claims 1 to 18.

40. A chip, comprising a processor configured to invoke a program from a memory, to cause a device on which the chip is installed to perform the method according to any one of claims 1 to 18.

41. A computer-readable storage medium, wherein the computer-readable storage medium stores a program, and the program causes a computer to perform the method according to any one of claims 1 to 18.

42. A computer program product, comprising a program, wherein the program causes a computer to perform the method according to any one of claims 1 to 18.

43. A computer program, wherein the computer program causes a computer to perform the method according to any one of claims 1 to 18.
